# EUROPEAN PATENT APPLICATION

(11) **EP 3 751 649 A1**
(43) Date of publication of application: **16.12.2020**
(21) Application number: 19884961.4
(22) Date of filing: 17.04.2019
(51) Int. Cl.: H01M 8/02, H01M 8/0202

(54) **FUEL CELL FLOW GUIDE PLATE**

(30) Priority: 16.11.2018 CN 201811372401
(71) Applicant: Shanghai Everpower Technologies Ltd., Shanghai 201206 (CN)
(72) Inventor: GAO, Yong, Shanghai 201206 (CN)
(74) Representative: Richly & Ritschel Patentanwälte PartG mbB
(86) International application number: PCT/CN2019/082997
(87) International publication number: WO 2020/098217

(57) **Abstract**

The present disclosure relates to a flow field plate for a fuel cell, the flow field plate (1) is provided with a plurality of fluid channels (3), each individual fluid channel splits and combines, comprises a divergence region and a conflux region, cross sections vary in terms of width and depth along each fluid channel so as to adjust flow rate and pressure of fluid, improving flow quality and forcing the fluid, while flowing along the fluid channel with varied rate, to enter a diffusion layer, forming a three-dimensional multi-layer flow pattern. Compared with the prior art, the present invention adjusts flow rate and pressure of fluid at different sites along the fluid channel, so as to transmit the reaction medium more effectively and removes generated water more effectively, having advantages such as improving stack capacity, improving reaction efficiency and prolonging stack service life and so on.

## Description

### BACKGROUND OF THE INVENTION

### 1. Technical Field

The present invention relates to fuel cells, and more particularly to a flow field plate for a fuel cell.

### 2. Description of Related Art

A fuel cell is a device for converting chemical energy from hydrogen and oxygen into electric energy through electrode reaction. A fuel cell is typically composed of a plurality of cell units. Each cell unit includes two electrodes (an anode and a cathode) which are separated by an electrolytic element, and cell units are serially connected to each other to form a fuel cell stack. By supplying the electrodes with proper reactants, namely supplying one electrode with fuel and supplying the other with oxidant, electrochemical reaction can be created to form potential difference between the electrodes and thus generating electric energy.

For supplying the electrode with proper reactants, specific interface elements usually called "bipolar plate" are installed at two sides of each individual cell. These bipolar plates are usually formed as individual elements placed near supports of the anode or the cathode. A bipolar plate is an essential element of a fuel cell set. During operation of a fuel cell stack, the bipolar plate provides the following functions to optimize the fuel cell stack in terms of working performance and service life: (1) working as a cell electrical conductor, the cathode and the anode are formed at two sides of the plate, respectively and individual cell units are connected in series to form a fuel cell stack; (2) providing the electrodes with reaction gas through channels (mass transfer); (3) coordinating water and heat management, so as to prevent the cooling medium and the reaction gas from leakage; and (4) providing structural strength support to the membrane electrode assemblies (MEAs).

"Bipolar plates" are usually structurally composed of fluid ports at two ends of the polar plate and channels connecting the fluid ports. Each fluid flows in through its dedicated inlet port and typically flows over the entire flow field plate along more than one coiled guiding grooves. After these guiding grooves converge, the fluid flows out from a fluid outlet port. Since the guiding groove(s) are so coiled and leads a long path, water tends to be generated in the fuel cell as product at the cathode side and block the air guiding groove, and water generated in the fuel cell also tends to appear at the anode sides due to reverse osmosis and block the hydrogen guiding groove. Especially, when a fuel cell is used in a power system for a car or a ship or in a mobile power generator having varying operating conditions, the power output by a fuel cell varies significantly, and thus water generated in the fuel cell is more likely to block the air guiding groove and the hydrogen guiding groove. China Patent No. CN200610027547.6 discloses a fuel battery flow guiding polar board with less water blockage. The guiding polar board is a bipolar guiding plate. The bipolar guiding plate comprises a positive air guiding groove plate, a negative hydrogen guiding groove plate, and a middle cooling flow guiding interlayer. The flow holes which air and hydrogen go in and out are one for in, and two or more holes for out. The guiding grooves and the connecting grooves which connect the guiding grooves are set between the flow holes for entrance and exit of air and hydrogen. The guiding grooves and the connecting grooves are designed as direct flow grooves or nearly direct flow grooves. The flow holes for entrance and exit of the cooling liquid are one, two or more holes for in, and two or more holes for out. The guiding grooves and the connecting grooves which connect the guiding grooves are set between the flow holes for the cooling liquid. The guiding grooves and the connecting grooves are designed as direct flow grooves or nearly direct flow grooves.

The foregoing design has plural fluid ports and shapes the guiding grooves as straight as possible so as to reduce water blockage as compared to the traditional, coiled channels. However, due to the limited size of the flow field polar plate, the design of the straight channels causes that hydrogen and air are expelled from the electric stack before fully reaction. Lots of air is wasted and excessive hydrogen is recycled, which leads to increased mechanical power consumption for air transfer and hydrogen recycling, in turn reducing the efficiency of the fuel cell system.

### SUMMARY OF THE INVENTION

For overcoming the shortcomings of the prior art, the objective of the present invention is to provide a flow field plate for a fuel cell. The flow field plate varies the flow rate and flow pressure of fluid at different sites along the fluid channel, and forces the fluid to enter a diffusion layer and form a three-dimensional flow pattern when flowing along the fluid channel, thereby allowing water generated to be discharged timely, so as to prevent water blockage and improve reaction efficiency.

The objective of the present invention may be achieved through the following technical schemes.

A flow field plate (1) for a fuel cell comprises a plurality of fluid channels (3), wherein each said fluid channel splits and combines alternately for several times to form a wave-like diverging and converging flow structure, so that each said fluid channel has a cross section with variable widths and depths for changing flow rate, flow direction and flow pressure of the fluid, so as to force the fluid to enter a diffusion layer and form a flow when flowing along the fluid channel, form a multi-layer three-dimensional flow comprising the multi-hole space of the diffusion layer.

A plurality of split blocks (7) is provided between each said fluid channel (3), the intervals between the plurality of split blocks can be the same or different depending on different designs, so that the fluid channel splits into at least two sub-channels passing by each said split block (7), and then the sub-channels combine immediately after passing the split block (7), thereby forming the wave-like diverging and converging fluid channel.

Each said fluid channel (3) comprises a plurality of continuous distributed/conflux units, each having an expansion part (A) and a converging part (B), the parts of the fluid channel (3) that are at the front side and at the end side of each distributed/conflux unit are confluent segments, the fluid channels at the distributed/conflux unit are diverging segments of at least two sub-channels that the confluent segments split into, in which the fluid has a flow rate S_{L} and a flow rate S_{P} at the confluent segments as measured at cross sections thereof (L, P), respectively and has a flow rate S_{N} at the diverging segment as measured at a cross section (N) thereof, and S_{L} and S_{P} are smaller than or equal to S_{N}.

By adjusting the width and/or the depth of the fluid channel (3) in the confluent segments and in the diverging segments, the flow rate and the flow direction of the fluid flowing at different sites along the fluid channel (3) can be changed.

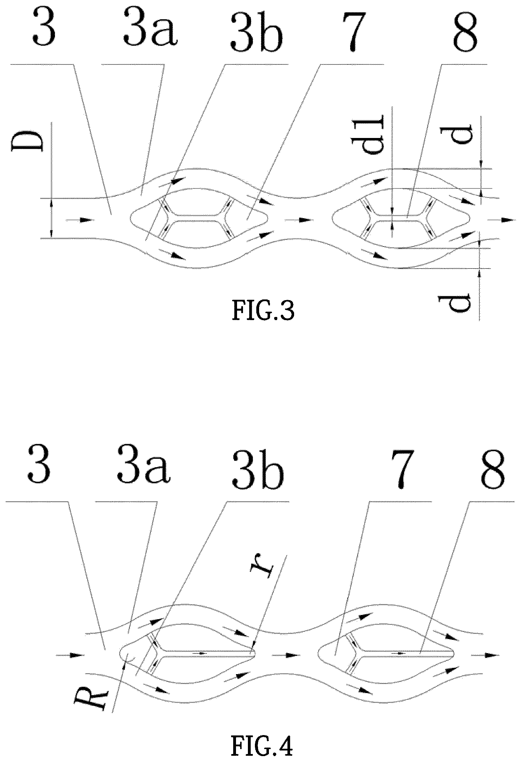

For example, in a first aspect of the present invention, the diameter or width D of the confluent segment of the fluid channel (3) is greater than or equal to the sum of the diameters or widths of a plurality of the diverging segments, and the diameter or width of each sub-channels of the diverging segment may be designed to be the same or different according to need, as shown in FIG. 3.

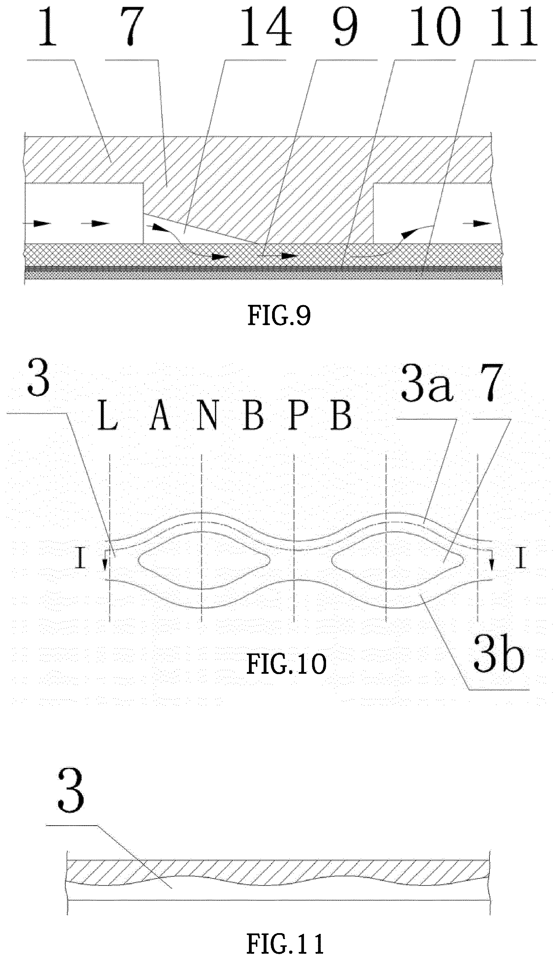

In a second aspect of the present invention, the depth of the confluent segment of the fluid channel (3) is different from the depth of sub-channels in the diverging segments, as shown in FIG. 11.

The split block (7) is a bump raised from the middle of the fluid channel (3), and the split block (7) has a streamlined, curved lateral profile, in which a curvature radius R at a front end of the streamlined, curved profile is the same or different from a curvature radius r at a rear end of the streamlined, curved profile according to the different flow of the fluid. Preferably, R is greater than or equal to r, as shown in FIG. 4.

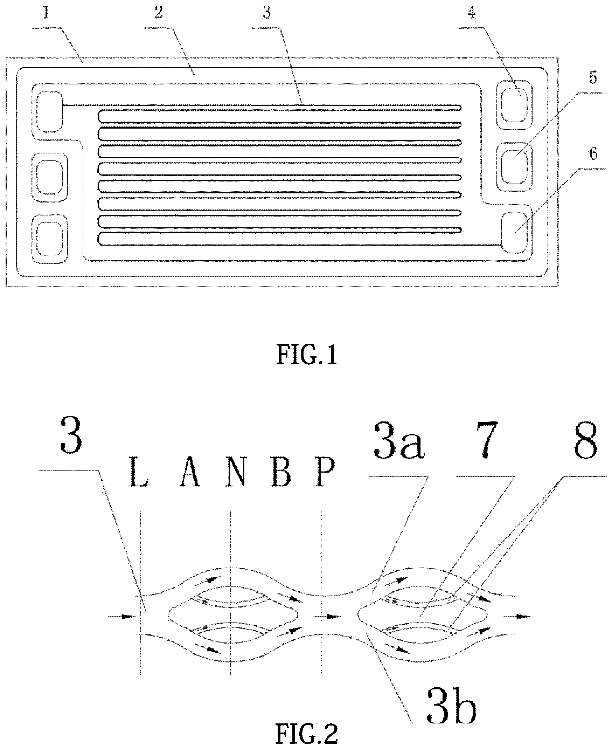

A plurality of auxiliary microflow-channels (8) are further arranged in the split block (7), the patterns of the fluid channels formed by the plurality of auxiliary microflow-channels (8) include arched, I-shaped, Y-shaped and/or T-shaped patterns, as shown in FIG. 2-FIG. 5.

Each of the auxiliary microflow-channels (8) has a depth or a width d smaller than the depth or the width D of the confluent segment of the fluid channel, and smaller than the depths or widths of the fluid channel at the diverging segment. Preferably, d = (1/5∼1/10) D.

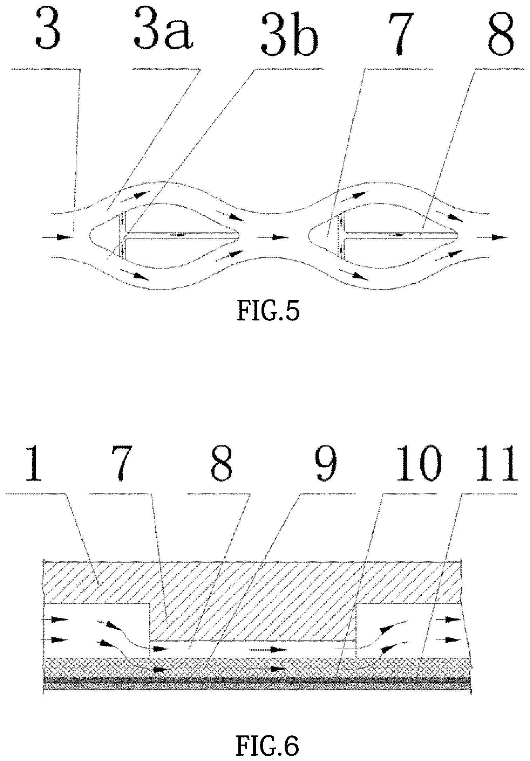

The depth of the auxiliary microflow-channel (8) is smaller than the depth of the fluid channel at the confluent segment, and is smaller than the depth of the fluid channel at the diverging segment, as shown in FIG. 6.

When the fluid flows out from the confluent channel, it hits the split block (7), a stagnant zone is formed in front of the split block (7) and the fluid is guided into the diffusion layer under the split block, so as to form the three-dimensional multi-layer flow pattern, thereby improving transmission of reaction medium in the diffusion layer and effectively removing water generated in the diffusion layer.

In a preferred scheme, a guiding ramp or guiding groove (14) is provided on the upper surface of the split block (7) at its windward side contacting the diffusion layer, so that when the fluid flows out from the confluent channel and is about to hit the split block (7), the fluid is guided into the diffusion layer under the split block by the guiding ramp/groove (14). The guiding groove or guiding ramp may be formed into any shape according to practical needs, as long as it can guide incoming fluid into the diffusion layer well. For example, the guiding groove may comprise a plurality of surface inclined micro grooves. Alternatively, the guiding ramp may have but is not restricted to have a triangular cross section.

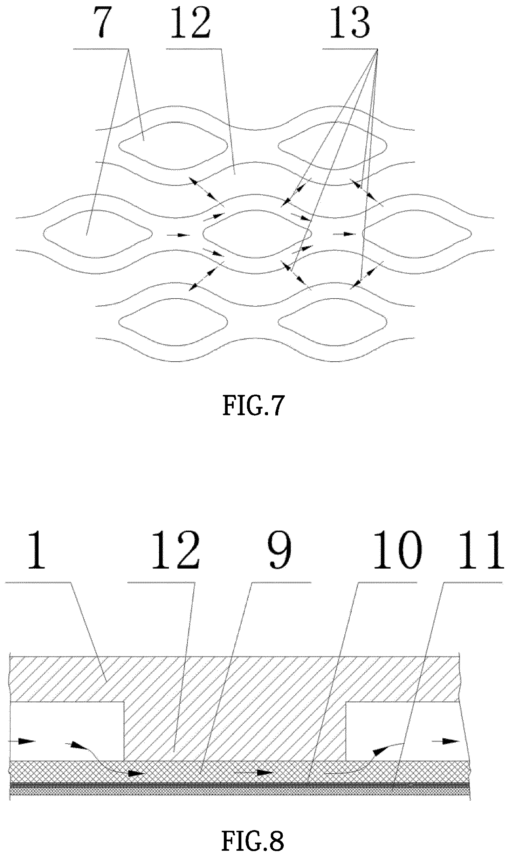

The area where the diverging segments of fluid channels are formed is defined as a divergence region (A), and where the confluent segments are formed is defined as a conflux region (B), in which the divergence region (A) of one said fluid channel (3) is adjacent to the conflux region (B) of an adjacent said fluid channel, and the flow pressure in the divergence region (A) tends to increase, flow pressure in the conflux region (B) tends to decrease, the pressure change leads to pressure difference between two sides of lateral walls of adjacent divergence region and conflux region, which drives the fluid to diffuse and flow in the diffusion layer under the lateral walls, from an end of the fluid channel where the flow pressure is high to an adjacent fluid channel where the flow pressure is low through the diffusion layer at lower parts of lateral walls of the fluid channel, thereby improving transmission of reaction medium in the diffusion layer, and effectively removing water generated in the diffusion layer at the lower parts of the lateral walls of the channel, so as to prevent blockage of the porous diffusion layer, as indicated by the double-headed arrow in FIG. 7. The double-headed arrow in FIG. 7 clearly shows that as the channel layout changes, the total flow pressure difference between the main flows in the adjacent channels may be different from the local flow pressure difference between the divergence and conflux regions, and therefore may counteract, reverse or amplify the flow pressure difference between the two sides of the lateral walls. The flow direction of the fluid depends on the magnitudes of the foregoing two kinds of flow pressure differences, and it is almost impossible that the difference can be completely cancelled out. According to actual design, the pressure differences can be allowed to exist or completely prevented. Either of them, which is left after contraction, drives the fluid to spread and flow in the diffusion layer at the lower parts of the lateral walls, and flow from an end of the fluid channel where the flow pressure is high to an adjacent fluid channel where the flow pressure through the diffusion layer at lower parts of lateral walls of the fluid channel, thereby improving transmission of reaction medium in the diffusion layer, and effectively removing water generated in the diffusion layer at the lower parts of the lateral walls of the channel, so as to prevent blockage of the porous diffusion layer.

As compared to the prior art, the present invention has the following beneficial features:

1. By adding a plurality of split blocks in fluid channels of a conventional flow field plate, the conventional fluid channels can be refit into fluid channels composed of plural divergence/conflux regions, and by adjusting the widths and depths at different sites along the fluid channels to change the flow rate of fluid, fluid can flow in the fluid channels with a variable flow rate instead of the constant flow rate as seen in the prior art. The variable flow rate causes a pressure difference that forces the fluid to enter and flow in the diffusion layer in fitting contact with the flow field plate as the fluid flows in the horizontal x-y direction, so as to create a Z-direction flow of the fluid and eventually forms the three-dimensional multi-layer flow pattern that timely removes water generated at the membrane electrodes and prevents water blockage.

2. The split block has a streamlined shape. By changing the curvature radius of the streamlined shape of the split block, the fluid can form an eddy in the fluid channel, so as to prevent generated water from wandering around the lateral walls of the fluid channel.

3. The split block contains plural auxiliary microflow-channels with small diameter and small depth, for further changing the flow rate and the flow pressure of the fluid at different sites along the fluid channel, so as to form a pressure difference that forces the fluid to enter the diffusion layer.

4. The adjacent fluid channels have their split blocks arranged staggeredly, so that the flows in adjacent fluid channels have pressure difference therebetween. The pressure difference forces the fluid to flow through the diffusion layer at the lower parts of the lateral walls of the fluid channel, and ensures that the fluid enters all regions of the diffusion layer adjacent to the flow field plate, thereby eliminating the existence of dead zones where there is no fluid flow at the lower parts of the lateral walls of the known fluid channel. As the fluid can flow throughout any region of the diffusion layer and participated in reaction, any water generated can be immediately flushed away and the risk of blockage is eliminated.

5. The disclosed flow field plate may be adapted to fuel cell flow field plate with any geometrical structures, such as flow field plate with straight channels, coiled flow field plates and so on, and may be used as a fuel flow field plate, an oxidant flow field plate, or a cooling fluid flow field plate.

### BRIEF DESCRIPTION OF THE DRAWINGS

FIG. 1 is a schematic structural diagram of a known flow field plate;
FIG. 2 is a schematic structural diagram of a distributed/conflux region in a flow field plate according to a first aspect of the present invention;
FIG. 3 is a schematic structural diagram of a distributed/conflux region in a flow field plate according to a second aspect of the present invention;
FIG. 4 is a schematic structural diagram of a distributed/conflux region in a flow field plate according to a third aspect of the present invention;
FIG. 5 is a schematic structural diagram of a distributed/conflux region in a flow field plate according to a fourth aspect of the present invention;
FIG. 6 is a schematic drawing showing a fluid flowing through the distributed/conflux region;
FIG. 7 is a schematic structural diagram of plural adjacent fluid channels;
FIG. 8 is a schematic drawing showing a fluid flowing through the adjacent fluid channels according to the present invention;
FIG. 9 is a schematic drawing showing a fluid flowing through a split block according to the present invention;
FIG. 10 is a schematic structural diagram of a distributed/conflux region in a flow field plate according to a fifth aspect of the present invention; and
FIG. 11 is a cross-sectional view taken along Line I-I of FIG. 10.

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

### Embodiment 1

FIG. 1 is a schematic structural diagram of a known flow field plate with straight channels. The flow field plate 1 is provided with linear fluid channels 3. At the two ends of the flow field plate 1, there are a fuel port 4, a cooling fluid port 5 and an oxidant port 6, there is also a sealing groove 2.

The present invention modifies the fluid channel 3 into the structure as depicted in FIG. 2. A plurality of split blocks 7 are provided in each of the fluid channels 3, so that the fluid channel when meeting the split blocks 7 are divided into two (as shown in FIGs. 2-5. For example, the fluid channel 3 is divided into two at its cross section L, namely one sub-channel 3a and another sub-channel 3b), which are combined at the cross section P after the split block 7, thereby forming a wave-like, continuous, alternately divergent and convergent fluid channel. Every fluid channel 3 is composed of a plurality of continuous distributed/conflux regions. Every distributed/conflux region comprises a expansion part A and a converging part B. The fluid channel 3 before and after each of the distributed/conflux regions is referred as a confluent segment and the fluid channel in the distributed/conflux regions is referred as diverging segments that are divided from the confluent segment. A fluid flows in the confluent segment with a flow rate S_{L} and flows in the diverging segment with a flow rate S_{N}, wherein S_{L}<S_{N}.

By choosing the width and/or depth of the fluid channel 3 in the confluent segments and in the diverging segments, the flow rate of a fluid at different sites along the fluid channel 3 can be set. For example, with the depth along the fluid channel 3 kept constant, by changing the relationship between the diameter D of the fluid channel 3 at the confluent segment and the diameters d1, d2 of the sub-channels in the diverging segment and making D≥d1+d2 and having the diameters d1 and d2 of the two sub-channels the same or different, the fluid when entering the diverging segment from the confluent segment necessarily flows faster because of the reduced channel area, so that S_{L}<S_{N}. Afterward, at P downstream the split block 7, the two sub-channels are combined as they leave the diverging segment, so the flow rate of the fluid returns to S_{L}.

In addition, by adjusting the depth H of the fluid channel 3 at the confluent segment and the depth h of the two sub-channels at the diverging segment, the flow rate can be changed, as shown in FIGs. 10-11. The fluid channel 3 has a wave-like profile, with gradually decreased depth from the depth H measured at the cross section L of the confluent segment to the depth h at the interface N, and then gradually increased depth from the depth at the interface N to the depth at the interface P.

The split block 7 is a bump raised from the fluid channel 3. The split block 7 has a streamlined, curved lateral profile. The curvature radius R at a front end of the streamlined, curved profile and the curvature radius r at a rear end of the streamlined, curved profile has a relationship of R≥r, as shown in FIG. 4, so that the fluid forms an eddy at the rear end of the split block 7.

The split block 7 further has a plurality of auxiliary microflow-channel 8. The plurality of auxiliary microflow-channels 8 form passages of an arched pattern (as shown in FIG. 2), an I-shaped pattern (as shown in FIG. 3), a Y-shaped pattern (as shown in FIG. 4) and/or a T-shaped pattern (as shown in FIG. 5), or a pattern of any shape according to practical needs. The diameter d of the auxiliary microflow-channel 8 and the diameter D of the confluent segment of the fluid channel has a relationship of d=1/5∼1/10D. The auxiliary microflow-channels 8 are used as an additional means for changing the flow rate and flow pressure of fluid at different sites along the fluid channel, so as to form a flow pressure difference that forces the fluid to enter and flow in the diffusion layer smoothly. The depth of the auxiliary microflow-channel 8 is smaller than the depth of the fluid channel at the confluent segment, and is smaller than the depth of the fluid channel at the diverging segment, as shown in FIG. 6.

As shown in FIG. 6, the flow field plate 7 has its bottom provided with MEA membrane electrodes, which includes a diffusion layer 9, a membrane electrode 11 and a catalyst layer 10 applied at its two sides. The diffusion layer 9 is attached to the flow field plate 1. After fluid enters the fluid channel 3 of the flow field plate 1 through the fluid inlet port, and flows through the confluent segment and the diverging segment of the fluid channel 3, the variations of its flow rate cause change in the flow pressure of the fluid, and the pressure difference so generated forces the fluid to enter the diffusion layer 9 attached to the flow field plate 1, and takes away water generated on the catalyst layer 10. This creates a three-dimensional flow pattern related to x, y and z directions. For ensuring that the fluid enters the diffusion layer 9 smoothly, a guiding groove or guiding ramp 14 may be additionally provided at the upper surface of the split block 7 at the fluidward side of split block 7 that contacts the diffusion layer, as shown in FIG. 9. When the fluid flows out the confluent segment and is about to hit the split block 7, the guiding groove or the guiding ramp 14 serves to guide the fluid into the diffusion layer 9 under the split block.

As shown in FIG. 7, the split blocks 7 in the adjacent fluid channels 3 are arranged staggeredly. Meanwhile, the diverging segment of one fluid channel 3 is adjacent to the confluent segment of the adjacent fluid channel. Where the diverging segment of the fluid channel is in is defined as a divergence region A, and where the confluent segment is in is defined as a conflux region B. The divergence region A of one fluid channel 3 is adjacent to the conflux region B of the adjacent fluid channel. The flow pressure of the fluid in the divergence region A tends to increase, and the fluid flow pressure in the conflux region B tends to decrease. Such pressure variations form pressure difference across two sides of the lateral walls 12 of the adjacent diffusion and conflux regions. The pressure difference drives the fluid to spread and flow in the diffusion layer 9 at the lower parts of the lateral walls 12 (as shown in FIG. 8), and flow from an end of the fluid channel where the flow pressure is high to an adjacent fluid channel where the flow pressure is low through the diffusion layer at lower parts of lateral walls 12 of the fluid channel, thereby improving transmission of the reaction medium in the diffusion layer, and effectively removing water generated in the diffusion layer at the lower parts of the lateral walls of the channel, so as to prevent blockage of the porous diffusion layer, as indicated by the double-headed arrow 13 in FIG. 7. The double-headed arrow in FIG. 7 clearly shows that as the channel layout changes, the total flow pressure difference between the main flows in the adjacent channels may be different from the local flow pressure difference between the divergence and conflux regions, and therefore may counteract, reverse or amplify the flow pressure difference between the two sides of the lateral walls 12. The flow direction of the fluid depends on the magnitudes of the foregoing two kinds of flow pressure differences, and it is almost impossible that the difference can be completely cancelled out. According to actual design, both existence and complete prevention is possible. In either way, the fluid is driven to spread and flow in the diffusion layer at the lower parts of the lateral walls, and flow from an end of the fluid channel where the flow pressure is high to an adjacent fluid channel where the flow pressure is low through the diffusion layer at lower parts of lateral walls 12 of the fluid channel, thereby improving transmission of the reaction medium in the diffusion layer, and effectively removing water generated in the diffusion layer at the lower parts of the lateral walls of the channel, so as to prevent blockage of the porous diffusion layer.

### Embodiment 2

In each fluid channel 3, plural of split blocks 7 are such arranged that a flow running along the fluid channel when encountering each split block 7 is divided into three flows and the three flows merge into one flow after passing the split block 7, so as to form a wave-like diverging and converging flow pattern. The rest of the present embodiment is identical to their counterparts in Embodiment 1.

## Claims

1. A flow field plate for a fuel cell, the flow field plate (1) comprising a plurality of fluid channels (3), wherein each said fluid channel splits and combines alternately for several times to form a wave-like diverging and converging flow channel structure, so that cross sections along each said fluid channel have variable widths and depths for adjusting flow rate, flow direction and flow pressure, so as to force the fluid, while flowing along the fluid channels, to enter a diffusion layer to form a flow pattern and to form a three-dimensional multi-layer flow pattern.

2. The flow field plate for a fuel cell of claim 1, wherein each said fluid channel (3) is provided with a plurality of split blocks(7), so that the fluid channel (3) splits into at least two sub-channels passing by each said split block(7), and then the sub-channels combine immediately after passing the split block(7), thereby forming the wave-like diverging and converging fluid channel.

3. The flow field plate for a fuel cell of claim 2, wherein each said fluid channel (3) comprises a plurality of alternate distributed/conflux regions, each having a diverging part (A) and a converging part (B), the fluid channel (3) before and after each distributed/conflux region is a confluent segment, the fluid channel at the distributed/conflux region is a diverging segment comprising at least two sub-channels divided from the confluent segmenin which the fluid has a flow rate S_{L} and a flow rate S_{P} at the confluent segments as measured at cross sections thereof (L, P), respectively and has a flow rate S_{N} at the diverging segment as measured at a cross section (N) thereof, and S_{L} and Sp are smaller than or equal to S_{N}.

4. The flow field plate for a fuel cell of claim 3, wherein the fluid channel (3) has different depths in the confluent segments and in the diverging segments, thereby allowing adjustment of the flow rates of the fluid at different sites along the fluid channel (3).

5. The flow field plate for a fuel cell of claim 3, wherein the fluid channel (3) has a diameter or a width D in the confluent segment that is greater than or equal to a sum of diameters or widths of the plural sub-channels, and different said sub-channels have their diameters or widths the same or different according to design.

6. The flow field plate for a fuel cell of claim 2, wherein the split block (7) is a bump raised from the fluid channel (3), and the split block (7) has a streamlined, curved lateral profile, in which a curvature radius R at a front end of the streamlined, curved profile is the same or different from a curvature radius r at a rear end of the streamlined, curved profile.

7. The flow field plate for a fuel cell of claim 6, wherein the split block (7) further has a plurality of auxiliary microflow-channels (8), the plurality of auxiliary microflow-channels (8) form channels with different shapes and flow directions, including arched, I-shaped, Y-shaped and T-shaped patterns, in which each of the auxiliary microflow-channels (8) has a depth and a width smaller than a depth and a width of the confluent segment of the fluid channel, and smaller than a depth and a width of the diverging segment.

8. The flow field plate for a fuel cell of claim 2, wherein when the fluid flows out from the combined channel, it hits the split block (7) to form a stagnant zone in front of the island and the fluid is guided into the diffusion layer under the split block, so as to form the three-dimensional multi-layer flow pattern, thereby improving transmission of a reaction medium in the diffusion layer and effectively removing water generated in the diffusion layer.

9. The flow field plate for a fuel cell of claim 8, wherein a fluidward side of the split block (7) is provided with a guiding ramp or guiding groove (14), so that when the fluid flows out from the combined channel, it hits the split block (7), the fluid is guided into the diffusion layer under the split block by the guiding ramp/groove (14).

10. The flow field plate for a fuel cell of claim 1, wherein in each said fluid channel, where the diverging segment is formed is defined as a divergence region (A), and where the confluent segment is formed is defined as a conflux region (B), in which the divergence region (A) of one said fluid channel (3) is adjacent to the conflux region (B) of an adjacent said fluid channel, and the fluid has a flow pressure in the distributing region (A) that is different from that in the conflux region (B) so as to form a flow pressure difference that drives the fluid to flow from an end of the fluid channel where the flow pressure is high to an adjacent fluid channel where the flow pressure through the diffusion layer at lower parts of lateral walls of the fluid channel, thereby improving transmission of a reaction medium in the diffusion layer, and effectively removing water generated in the diffusion layer at the lower parts of the lateral walls of the channel, so as to prevent blockage of the porous diffusion layer.
